# EUROPEAN PATENT APPLICATION

(11) **EP 1 883 243 A2**
(43) Date of publication of application: **30.01.2008**
(21) Application number: 07112914.2
(22) Date of filing: 23.07.2007
(51) Int. Cl.: H04N 7/24

(54) **System and method for offering related sub-services simultaneously with main service in offering DVB-H service**

(30) Priority: 28.07.2006 KR 20060071733
(71) Applicant: Samsung Electronics Co., Ltd., Suwon-si Gyeonggi-do (KR)
(72) Inventor: Lee, Byoung-Dai c/o Samsung Electronics Co., Ltd., Gyeonggi-do (KR); Jeon, Jin-Woo c/o Samsung Electronics Co., Ltd., Gyeonggi-do (KR); Kim, Young-Jip c/o Samsung Electronics Co., Ltd., Gyeonggi-do (KR); Lee, Kang-Hoon c/o Samsung Electronics Co., Ltd., Gyeonggi-do (KR); Cho, Byung-Duck c/o Samsung Electronics Co., Ltd., Gyeonggi-do (KR); Han, Young-Seop c/o Samsung Electronics Co., Ltd., Gyeonggi-do (KR)
(74) Representative: Zimmer, Franz-Josef

(57) **Abstract**

Disclosed is a system and a method for offering a digital video broadcasting service, and for offering multiple sub-services connected with a main service simultaneously with the main service while offering a DVB-H service. The system includes a digital broadcasting station for adding SubSchedulelD fields, in which information on at least one sub-service connected with a main service can be respectively stored, to a service information fragment offering information on services, for setting schedule IDentification (ID) values included in a fragment of the sub-service to SubSchedulelD values of the SubSchedulelD fields, for generating the service information fragment, for including the generated service information fragment in Electronic Service Guide (ESG) data, and for transmitting the ESG data; and a digital broadcasting receiving terminal for receiving the ESG data, for checking information on at least one sub-service connected with a selected main service through the service information fragment if the main service is selected, and for displaying the checked sub-services simultaneously with the main service.

## Description

The present invention relates to a system and a method for providing a digital broadcasting service, and more particularly to a system and a method for providing a digital broadcasting service, which offers broadcasting information while offering a Digital Video Broadcasting-Handheld (DVB-H) service.

In general, digital broadcasting services are usually provided to users through home TeleVision (TV) sets and mobile terminals. There are many cases where users have recently been supplied with the digital broadcasting services through the mobile terminals. Mobile TV services corresponding to digital broadcasting offered through the mobile terminals are being defined according to various forms of the standards such as Digital Multimedia Broadcasting (DMB), Digital Video Broadcasting-Handheld (DVB-H), Open Mobile Alliance BroadCAST (OMA-BCAST), etc. Also, the mobile TV services are being provided to users through exhibition broadcasting or main broadcasting including the Republic of Korea, European countries and the United States on the basis of the standards. The mobile TV services, including the existing digital TV services, offer a new type of service named a data service in addition to video/audio services provided by the existing broadcasting services.

DVB-H Convergence of Broadcasting and Mobile Services (CBMS) standards and Nokia Open Application Interface (OAI) standards are used as DVB-H transmission standards among the standards of the aforesaid mobile TV services. In the DVB-H CBMS standards and Nokia OAI standards, configuration parameters necessary to receive the service, detailed content, and the actual services provided on each channel are delivered through an Electronic Service Guide (ESG). This ESG is made up of fragments, and delivers various types of information required for a service purchase, a selection and the reproduction of services through the fragments.

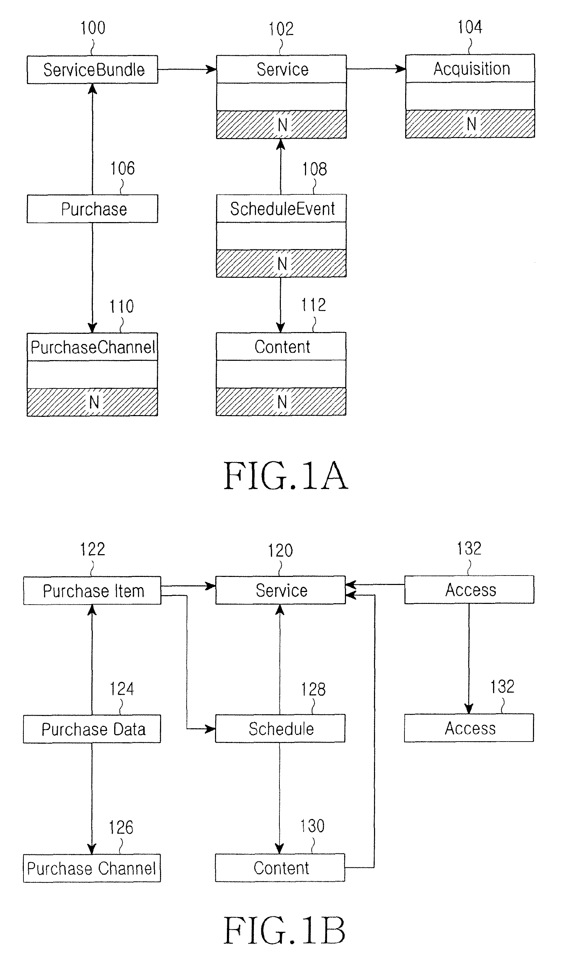

The fragments and the relation among the fragments defined in the DVB-H CBMS standards and Nokia OAI standards will be described with reference to FIGs. 1A and 1B. The ESG fragments largely include a fragment related to the service purchase, a fragment related to service information, and a fragment related to service reception. The fragment related to the service purchase, in the case of paid services, provides information necessary for a purchase of a relevant channel or of a specific service. Content included in the fragment related to the service information cover detailed information on each channel such as the name of a channel supplier, detailed information on a service offered by each channel (e.g., time interval for a service provision, a service genre, an age allowed to view a service, etc.), and the actual contents used in each service (e.g., detailed information on audio, video or images). In addition, the fragment related to service reception includes information necessary to receive a selected service (e.g., an Internet Protocol (IP) address and a port number, etc., of stream including audio, video or data, etc., corresponding to a stream constructed to include the selected service).

FIG. 1A is a diagram illustrating the kinds of fragments and the relation among the fragments defined in the DVB-H CBMS. With reference to FIG. 1 A, the ESG consists of seven fragments. The fragments have a structure in which the fragments are relationally associated with one another, and refer to the other data. A schedule event 108 indicates a service 102, a list of an acquisition 104 and a list of a content 112 for the service. A service 102 indicates a list of an acquisition 104 corresponding to the service, and the content 112 indicates a list of the service 102 to which the content itself belongs. A service bundle 100 indicates a list of the service 102, and a purchase 106 indicates a list of the service bundle 100 and a list of a purchase channel 110. Therefore, as shown in FIG. 1A, fragments 100 to 112 are relationally associated with one another.

FIG. 1 B is a diagram illustrating the kinds of fragments and the relation among the fragments defined in the Nokia OAI, wherein the fragments 100, 102, 103, 106, 108, 110, and 112 illustrated in FIG. 1A loosely correspond to fragments 122, 120, 132, 124, 128, 134, 126, and 130 shown in FIG. 1 B.

In order to provide detailed information on each service among the fragments includes in the ESG, the detailed information on each service is offered through the schedule event fragment in the DVB-H CBMS standards, and the detailed information on each service is offered through a schedule fragment in the Nokia OAI standards.

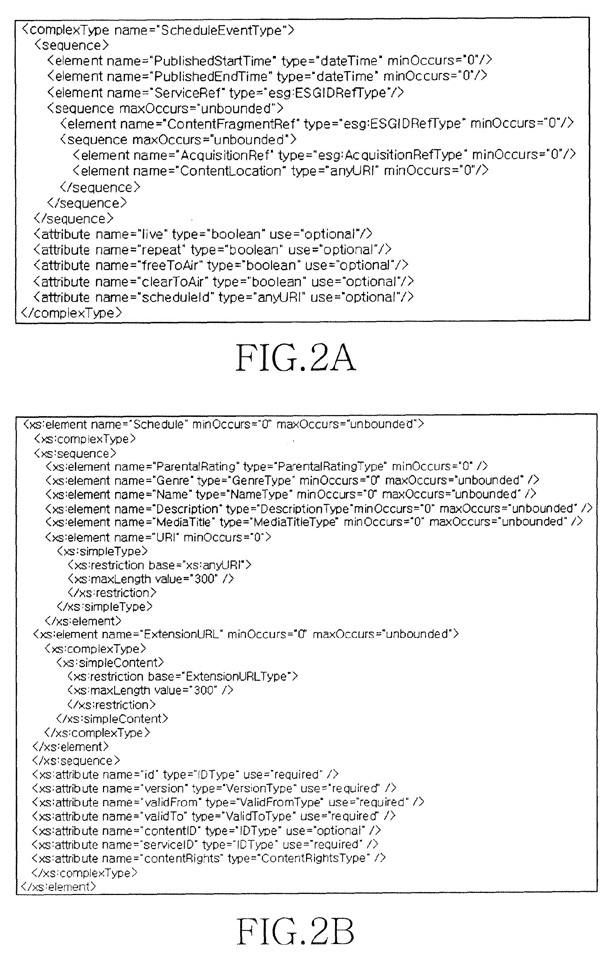

In the DVB-H CBMS standards, a scheme of the schedule event fragment for providing the detailed information on each service is illustrated in FIG. 2A Detailed information necessary to receive a relevant service is included in the acquisition fragment indicated by the schedule event fragment, or is transmitted through a Session Description Protocol (SDP) file indicated by the acquisition fragment. However, because it is assumed that each service is basically made up of one sub-service in the schedule event fragment, in a case where one service consists of multiple sub-services, a field in which information on the sub-services can be stored does not exist. Information necessary to receive all sub-services included in the SDP file can be included. Still, in this case, the IP address and the port number corresponding to the detailed information necessary to receive the sub-services can be acquired, but information on each sub-service itself can not be offered. For instance, in a case where it is assumed that an arbitrary service includes a free video service and a paid file download service, even though information necessary to receive each service through the SDP can be obtained, detailed information necessary to view a paid service, such as key stream information, is not able to be provided through the SDP.

In the Nokia OAI standards, a scheme of the schedule event fragment for providing the detailed information on each service id illustrated in FIG. 2B.detailed information necessary to receive each service, including a SDP file can be obtained through the service fragment that includes detailed information on a channel on which a relevant service is offered. Still, since a service made up of a plurality of sub-services is also not being considered in the Nokia OAI that is based on the DVB-H CBMS standards, the same problems exist as described in the above-mentioned DVB-H CBMS.

As previously stated, in a case where a user chooses a prescribed channel at a predetermined time as in the existing TV broadcasting service in the DVB-H standards, there is provided only the form in which a single type of service is offered among the services, corresponding to the form in which there is offered only one service among video/audio/data services. Namely, in mobile TV standards that is based on the DVB-H transmission standards, because there is no function for providing a service grouping that offers grouped multiple services as one service, or because only information such as the IP address and the port number, necessary to receive sub-services, can be acquired, sub-services are only partially offered.

Accordingly, the present invention has been made to solve at least the above problems occurring in the prior art. It is the object of the present invention to provide a system and a method for offering a digital video broadcasting service, which simultaneously offers multiple sub-services connected with a main service and the main service while offering a DVB-H service.

This object is solved by the subject matter of the independent claims.

Preferred embodiments are defined in the dependent claims.

In order to accomplish the object of the present invention, there is provided a system for offering a digital video broadcasting service, and for simultaneously offering multiple sub-services connected with a main service and the main service while offering a DVB-H service according to an embodiment of the present invention, including a digital broadcasting station for adding subschedule-identification fields (in the following referred to as SubSchedulelD fields), in which information on at least one sub-service connected with a main service can be stored, to a service information fragment offering information on services, setting schedule IDentification (ID) values included in a fragment of the sub-service to SubScheduleID values of the SubScheduleID fields, generating the service information fragment, including the generated service information fragment in Electronic Service Guide (ESG) data, and transmitting the ESG data; and a digital broadcasting receiving terminal for receiving the ESG data, checking information on at least one sub-service connected with a selected main service through the service information fragment if the main service is selected, and simultaneously displaying the checked sub-services and the main service.

In accordance with another aspect of the present invention, there is provided a method for offering a digital video broadcasting service, and for simultaneously offering multiple sub-services connected with a main service and the main service while offering a DVB-H service, by a system for offering a digital video broadcasting service, including a digital broadcasting station and a digital broadcasting receiving terminal according to an embodiment of the present invention, including adding, by the digital broadcasting station, SubScheduleID fields, in which information on at least one sub-service connected with a main service can be stored, to a service information fragment offering information on services; setting schedule IDentification (ID) values included in a fragment of the sub-service to SubSchedulelD values of the SubSchedulelD fields, generating the service information fragment, including the generated service information fragment in Electronic Service Guide (ESG) data, and transmitting the ESG data, by the digital broadcasting station; receiving the ESG data, and checking information on at least one sub-service connected with a selected main service through the service information fragment if the main service is selected, by the digital broadcasting receiving terminal; and simultaneously displaying, by the digital broadcasting receiving terminal, the checked sub-services and the main service.

The above and other exemplary features, aspects, and advantages of the present invention will be more apparent from the following detailed description taken in conjunction with the accompanying drawings, in which:
FIGs. 1A and 1B are diagrams illustrating the structure of ESG data of an IP-based digital broadcasting receiving terminal using ESG data as channel information;
FIG. 2A is a diagram showing a scheme of the schedule event fragment defined in the DVB-H CBMS;
FIG. 2B is a diagram showing a scheme of the schedule fragment defined in the Nokia OAI;
FIG. 3 is a block diagram illustrating a configuration of a digital broadcasting system applied to the present invention;
FIG. 4 is a block diagram illustrating a configuration of a digital broadcasting station according to an exemplary embodiment of the present invention;
FIG. 5 is a block diagram illustrating a configuration of a digital broadcasting receiving terminal according to an exemplary embodiment of the present invention;
FIG. 6 is a control flowchart illustrating a process for transmitting ESG data including information on multiple sub-services connected with a main service in a digital broadcasting station according to an exemplary embodiment of the present invention;
FIGs. 7A and 7B are diagrams illustrating a schema of a schedule event fragment including a field that is able to store information on sub-services connected with a main service according to an exemplary embodiment of the present invention;
FIG. 8 is a control flowchart illustrating a process for simultaneously offering multiple sub-services connected with the main service and the main service while receiving ESG data by a digital broadcasting receiving terminal according to an exemplary embodiment of the present invention; and
FIGs. 9A, 9B and 9C are diagrams illustrating an example of the relation between a schedule event fragment for a main service and a schedule event fragment for a sub-service according to an exemplary embodiment of the present invention.

Hereinafter, exemplary embodiments of the present invention will be described with reference to the accompanying drawings. The same elements will be designated by the same reference numerals throughout the following description and drawings although they are shown in different drawings. Further, in the following description of the present invention, a detailed description of known functions and configurations incorporated herein will be omitted when it may make the subject matter of the present invention rather unclear.

The present invention provides schemes in which a user can be simultaneously provided with various kinds of services, not only one image stream, by including additional services in a main service in offering the audio/video services.

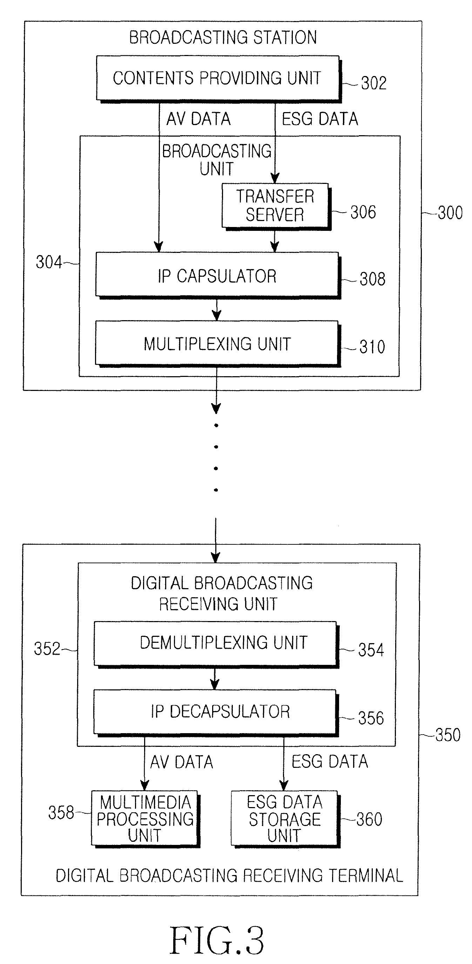

A block configuration of a DVB-H system among digital broadcasting systems applied to the present invention will be described with reference to FIG. 3.

With reference to FIG. 3, a broadcasting station 300 for sending digital broadcasting data on the air can be made up of a contents providing unit 302and a broadcasting unit 304. The contents providing unit 302 corresponds to a configuration unit under the control of a contents provider, and generates various kinds of digital broadcasting content sent on the air by a DVB-H broadcasting station. The broadcasting unit 304 corresponds to a configuration unit that a common carrier manages, and corresponds to a configuration unit for packetizing broadcasting contents generated by the contents providing unit 302 into packets, for multiplexing packetized broadcasting content, and for sending the multiplexed and packetized broadcasting content on the air as a Radio Frequency (RF) signal. The content provider refers to a provider that controls the generation of various kinds of content sent on the air in a digital broadcasting system. The common carrier refers to a provider that is in charge of offering a user the broadcasting content as a service through a leased frequency of a specific communication line.

Data provided by the contents providing unit 302 can be classified into AN (Audio/Video) data corresponding to program data of a broadcasting channel and an ESG. Herein, AN data refers to multimedia data for reproducing an audio signal and a video signal by a receiver terminal from the broadcasting contents provided by the content providing unit 302. DVB-H includes multimedia information related to broadcasting programs, information for communicating with the broadcasting channels (e.g., purchase information), etc., besides the program data of the broadcasting channel. Hence, the ESG corresponding to the broadcasting data of the DVB-H has an IP-based transmission data format, and also includes the program data of the broadcasting channels and various kinds of data related to broadcasting. Namely, the ESG data provides information for performing a communication function with a broadcasting station or a broadcaster, such as a channel service of a traditional concept, multimedia data (i.e. title images, title video data, and title audio data) information on content corresponding to a program sent on the air through a relevant channel, the purchase information, etc.

In addition, if the contents providing unit 302 supplies this data, the common carrier packetizes/multiplexes input data through the broadcasting unit 304 according to digital broadcasting scheme, and sends the packetized/multiplexed data on the air. Accordingly, the broadcasting unit 304 is equipped with a configuration unit for packetizing the broadcasting data and a multiplexing unit 310.

In a case where the present digital video broadcasting system corresponds to the DVB-H system as illustrated in FIG. 3, the broadcasting unit 304 is equipped with an IP capsulator 308 as the packetizing unit. Herein, the IP capsulator 308 is a configuration unit for packetizing (i.e., IP capsulation) AN data and the ESG data according to an Internet Protocol Data Casting (IPDC) scheme corresponding to a broadcasting scheme of the DVB-H system. In a case where data whose parsing is not accomplished such as the ESG data, by using a transfer server 306, etc., to which a flute protocol, etc., is applied so that the data can be transferred more safely, the integrity of data that is being transmitted can be also increased.

If the broadcasting station 300 sends the multiplexed A/V data and the ESG data on the air, a digital broadcasting receiving terminal 350 receives broadcasting data through a broadcasting receiving unit 352. The received data is demultiplexed and decapsulated by a demultiplexing unit 354 and an IP decapsulator 356 that are included in the broadcasting receiving unit 352, and is restored to the original AN data and ESG data. The AN data is provided to a multimedia processing unit 358 of the digital broadcasting receiving terminal 350, and digital broadcasting on a channel selected by the user is output. The ESG data is provided to an ESG data storage unit 360 of the digital broadcasting receiving terminal 350, and the program guide information of digital broadcasting content that the broadcasting station 300 sends on the air can be output if the user desires to output the ESG data.

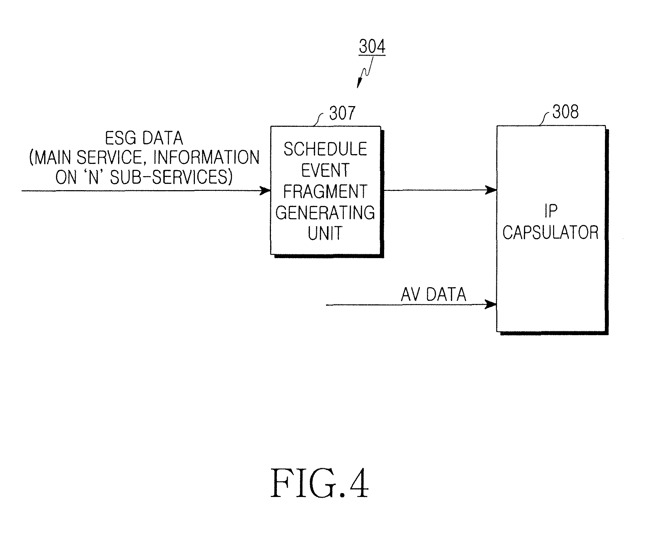

A configuration of the digital broadcasting station for generating schedule event fragments including detailed information on a main service and sub-services connected with the main service according to the present invention, for including the generated schedule event fragments in the ESG, and for transmitting the ESG data, will be considered with reference to FIG. 4.

If the ESG data is input to a schedule event fragment generating unit 307, the schedule event fragment generating unit 307 generates a service event fragment acquired by grouping information on sub-services connected with a specific main service. A method for grouping information on main services and information on sub-services will be specifically described. The configuration for generating the service event fragment in the DVB-H CBMS standards in an embodiment illustrated in FIG. 4 is described, but, in a case of a configuration for providing information on sub-services related to a main service in the Nokia OAI standards, the above-stated schedule event generating unit can be replaced by a schedule fragment generating unit, and the operation is the same as the operation in the DVB-H CBMS standards.

In the present invention, two methods will be proposed for grouping the information on the sub-services connected with the specific main service in the schedule event fragment generating unit 307.

A first method is to add a "SubSchedulelD" field corresponding to a field for storing the information on the sub-services connected with the main service to a usual ESG fragment. A second method is to add each of the sub-services connected with the main service as a separate fragment.

The first method for adding the "SubScheduleID" field corresponding to the field for storing the information on the sub-services connected with the main service to the usual ESG fragment, will be described.

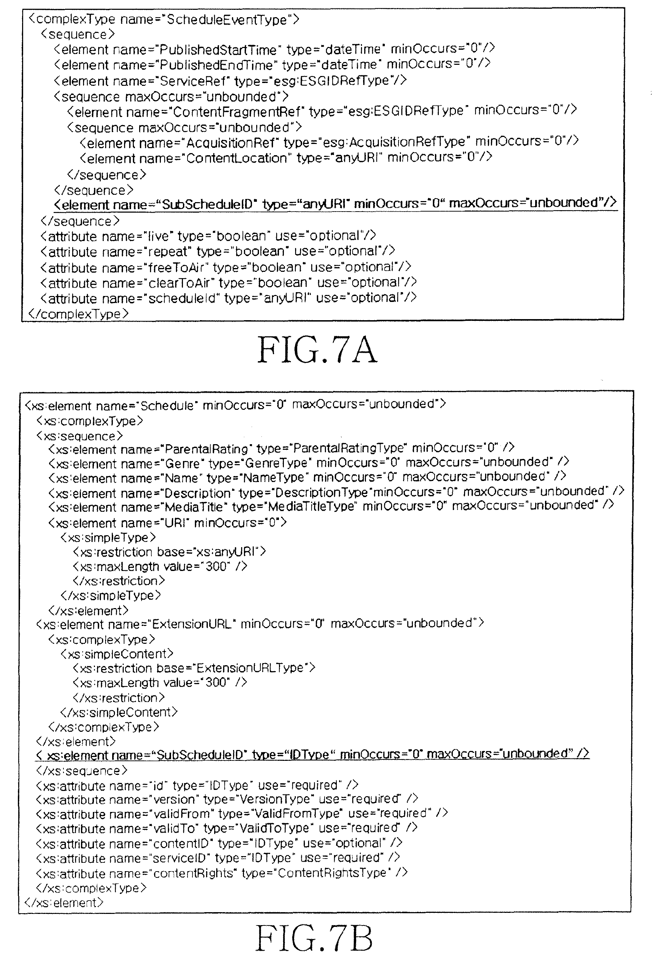

A scheme in which the "SubScheduleID" field for storing the information on the sub-service is added to the schedule event fragment in the DVB-H standards is illustrated in FIG. 7A. in a case where an arbitrary specific main service A consists of n sub-services, n sub-schedule ID fields are included in a schedule event fragment describing the main service A. In addition, a schedule ID value included in a schedule event fragment of a relevant sub-service is set to each sub-schedule ID value.

A scheme in which the "SubScheduleID" field for storing the information on the sub-service is added to the schedule fragment in the Nokia OAI standards is illustrated in FIG. 7B.

The second method for adding each of the sub-services connected with the main service as the separate fragment will be described.

Logically, the sub-service has a subordinate service concept included in an arbitrary main service, but because the sub-service itself can be offered even as an independent service, information necessary to denote the sub-services uses all fields of the fragments in which information on the main services is stored. For example, all fields used in the schedule event fragments in the DVB-H CBMS standards, or all fields used in the schedule fragments in the Nokia OAI standards should be used.

The first method has a special feature in that one fragment is commonly used to describe a main service and the sub-services, and the second method has a characteristic in that a different fragment is used to describe a main service and the sub-services. However, in the case of the second method, in a fragment used to describe the main service and in another fragment used to describe the sub-services, most of the fields used in the fragments are the same, and, a "SubScheduleID" field corresponding to a field for referring to the fragment that is storing information on the sub-services is further included in the fragment used to describe the main service.

A field for providing notice that the schedule event fragment is a fragment denoting the main service or the sub-service can be added. This function can be implemented by using a combination of the existing field values. For instance, "ServiceRef" should be set to an effective value in the case of the main service, whereas "ServiceRef" may be set to an ineffective value in the case of the sub-service. In this manner, it is possible to tell the difference between the main service and the sub-service.

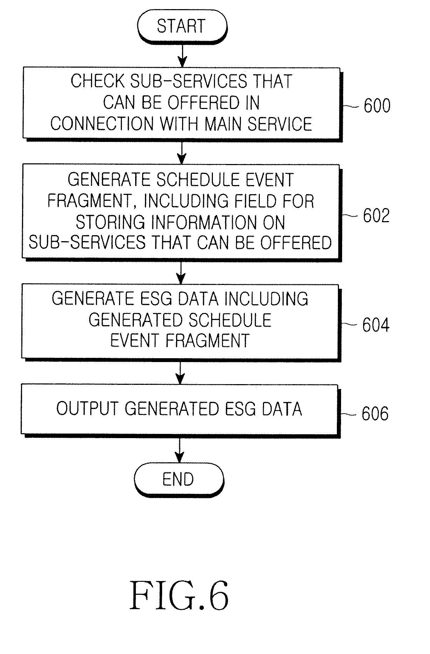

As mentioned above, a process for transmitting ESG data acquired by grouping information on multiple sub-services connected with a main service through the schedule event fragment generating unit 307 in a digital broadcasting station according to an exemplary embodiment of the present invention will be described with reference to FIG. 6.

First, after checking sub-services that can be offered in connection with a main service in step 600, in step 602 a schedule event fragment is generated, including a field for storing information on the sub-services that can be offered. At this time, the generation of the fragment can be accomplished by using one of the two methods.

In step 604, ESG data including the generated schedule event fragment, is generated, and in step 606 the generated ESG data is output.

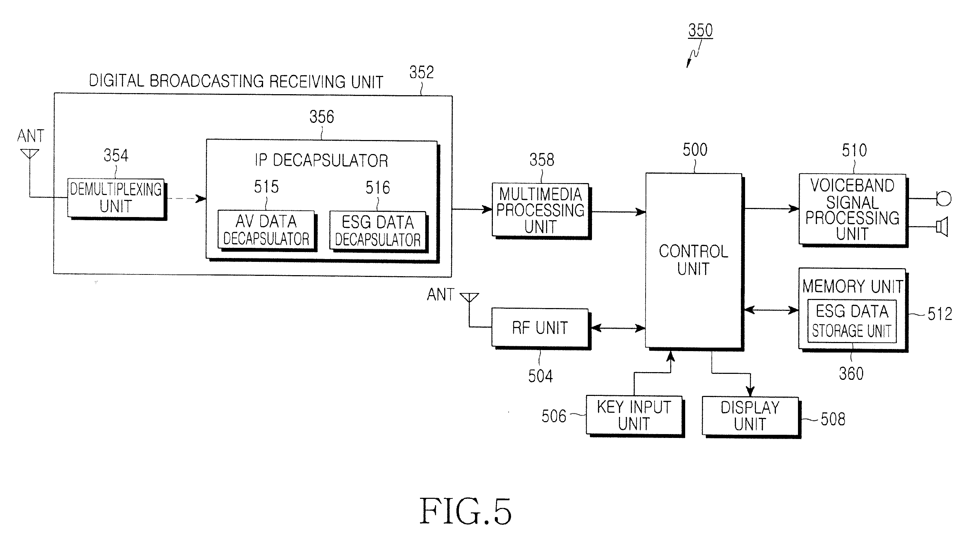

Next, with reference to FIG. 5, a description will be made of a configuration of the digital broadcasting receiving terminal by which, as stated above, the ESG data including the fragment(s) used in grouping information on the main service and information on the sub-services is received, the information on the main service and the information on the sub-services are checked by parsing the received ESG data, and a user is simultaneously supplied with the sub-services and the main service.

Referring to FIG. 5, the digital broadcasting receiving terminal 350 according to an exemplary embodiment of the present invention includes a digital broadcasting receiving unit 352, an RF unit 504, a key input unit 506, a display unit 508, a memory unit 512, a voiceband signal processing unit 510, and a control unit 500.

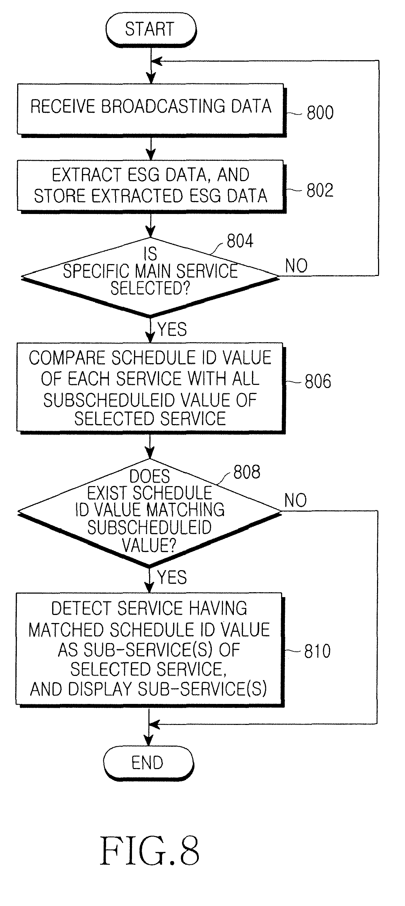

The control unit 500 performs a usual overall control function, processes a voice signal and data according to a wireless internet connection and to a protocol for digital broadcasting, and controls each unit of the digital broadcasting receiving terminal 350. The control unit 500 according to an exemplary embodiment of the present invention checks information on at least one sub-service connected with the selected main service through a fragment for storing the information on the sub-services, if the ESG data is received and if a main service is selected, and controls the display unit 508 to simultaneously display the selected main service and the checked sub-service(s) on screen. A detailed control operation of the control unit 500 will be described with reference to FIG 8.

The digital broadcasting receiving unit 352 is equipped with a demultiplexing unit 354 for demultiplexing received digital broadcasting data into AN data and ESG data, and an IP decapsulator 356 for decapsulating the demultiplexed data. The IP decapsulator 356 according to an exemplary embodiment of the present invention is equipped with an AN data decapsulator 515 for decapsulating the AN data provided from the demultiplexing unit 354 and an ESG data decapsulator 516 for decapsulating the ESG data provided from the demultiplexing unit 354.

The RF unit 504 can be made up of an RF module and a baseband processing unit, which are conventionally required to perform a wireless communication with a base station. The RF module transmits/receives an RF signal with the base station through an ANTenna (ANT). Then, first, the RF module converts a received RF signal into an Intermediate Frequency (IF) signal, and outputs the IF signal to the baseband processing unit. Also, the RF module converts an IF signal providing from the baseband processing unit into an RF signal, and transmits the RF signal. The baseband processing unit corresponds to a Baseband Analog Asic (BAA) providing the interface between the control unit 500 and the RF module, converts a digital signal of baseband applied by control unit 500 into an analog IF signal, and applies the analog IF signal to the RF module. In addition, the baseband processing unit converts an analog IF signal applied by the RF module into a digital signal of baseband, and provides the digital signal of baseband to the control unit 500.

The key input unit 506 is equipped with various kinds of keys, including numeric keys, and provides the control unit 500 with a key input signal in response to an input action of a user.

The display unit 508 displays various kinds of messages, etc., under the control of the control unit 500. The display unit 508 can be constructed of Liquid Crystal Displays (LCDs), Thin Film Transistors (TFTs), organic ELectroluminescence (EL), etc.

The memory unit 512 is constructed of Read Only Memories (ROMs), flash memory, Random Access Memories (RAMs), etc. In the ROMs among there memories, programs for processes and controls of the control unit 500 and various kinds of reference data are stored. Also, the RAMs provide the control unit 500 with a working memory. The flash memory provides a storage area to various kinds of data for storage that can be updated. Especially, the memory unit of the present invention is equipped with an ESG data storage unit 360 that, under the control of the control unit 500, parses the ESG data, and can store the information on the sub-services connected with the specific main service checked following parsing. If a result of parsing is previously stored in this manner, in a case where the user chooses a specific service, the service can be immediately offered by using previously stored information, and therefore, the time necessary to offer the service can be reduced.

The voiceband signal processing unit 510 is connected to a MICrophone (MIC) and a SPeaKer (SPK), converts a voice signal received by the MIC during call connection into data, and outputs the data to the control unit 500. Also, the voiceband signal processing unit 510 enables the SPK to convert voice data provided from the control unit 500 into audible sounds, and outputs the audible sounds.

In a digital broadcasting receiving terminal configured as previously stated, an operation process for simultaneously offering multiple sub-services connected with the main service and the main service while receiving ESG data will be described with reference to FIG. 8.

In step 800, if broadcasting data is received according to a digital video broadcasting mode selected by a user, the control unit 500 extracts ESG data from the received broadcasting data, and stores the extracted ESG data in step 802. If a specific main service is selected in step 804 by the user, the control unit 500 proceeds to step 806 to compare a schedule ID value of each service with all "SubScheduleID" value of the selected service. In step 808, the control unit 500 checks if there exists a schedule ID value that matches the "SubScheduleID" value. If it is determined in step 808 that there exists a schedule ID value that matches the "SubScheduleID" value, the control unit 500 proceeds to step 810 to detect a service having the matched schedule ID value as sub-service(s) of the selected service, and displays the sub-service(s).

In a case where a user selects an arbitrary specific service, a DVB-H terminal compares a schedule ID field value of a schedule event fragment of each service or a schedule ID field value of a schedule fragment of each service with all "SubScheduleID" field value of the selected service. In a case where there exists a matched "SubScheduleID," a relevant service is regarded as sub-service(s) of the selected service, and the user can be supplied with the sub-service(s). In a case where there exists no "SubScheduleID" field value in a schedule event fragment instance, the terminal detects that the schedule event fragment exists for sub-service(s).

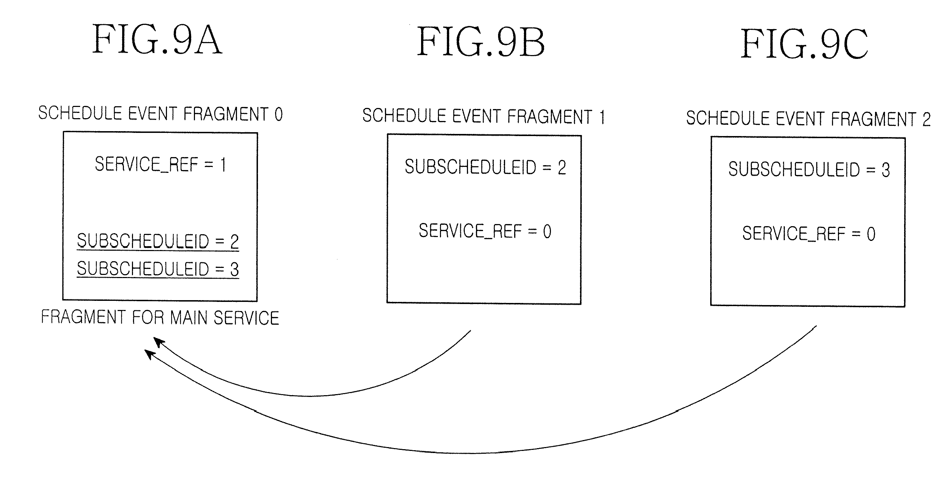

For example, with reference to FIGs. 9A 9B and 9C, in the digital broadcasting receiving terminal, to explain the relation between a schedule event fragment for a main service and a schedule event fragment for sub-services, it is assumed that a schedule event fragment corresponding to a main service selected by a user is as shown in FIG. 9A. Then, because "SubScheduleID" values includes 2 and 3 in the schedule event fragment shown in FIG. 9A, the terminal checks if there exists a fragment whose schedule ID field values are set to 2 and 3 among schedule ID field values of other stored schedule event fragments. If so, the terminal detects that the fragments, as shown in FIGs. 9B and 9C are sub-service(s) connected with the main service selected by the user. Then, information on the checked sub-services is simultaneously displayed on the screen with the main service.

As described above, the present invention proposes a method in which in standards of mobile TV services that use DVB-H transmission standards, by adding a field for storing information on sub-services to an ESG fragment, multiple sub-services can be used in a selected service when a specific channel is selected. The user can be simultaneously supplied with sub-services and a main service. For example, the user can simultaneously perform an additional service such as telephone sounds download while viewing a TV set.

While the invention has been shown and described with reference to certain exemplary embodiments thereof, it will be understood by those skilled in the art that various changes in form and details may be made therein without departing from the scope of the invention. Therefore, the scope of the present invention is not limited by the described embodiments but defined by the appended claims.

## Claims

1. A system for providing a digital video broadcasting service, and for simultaneously providing multiple sub-services connected with a main service with the main service while providing a DVB-H service, the system comprising:
a digital broadcasting station for adding subschedule-identification fields, in which information on at least one sub-service connected with a main service can be stored, to a service information fragment providing information on services, setting schedule ID values included in a fragment of the sub-service to subschedule-identification values of the subschedule-identification fields, generating the service information fragment, including the generated service information fragment in electronic service guide, ESG, data, and transmitting the ESG data; and
a digital broadcasting receiving terminal for receiving the ESG data, checking information on at least one sub-service connected with a selected main service through the service information fragment if the main service is selected, and simultaneously displaying the checked sub-services and the main service.

2. The system as claimed in claim 1, wherein the service information fragment corresponds to a schedule event fragment in digital video broadcasting-handheld convergence of broadcasting and mobile services, DVB-H CBMS, standards.

3. The system as claimed in claim 1, wherein the service information fragment corresponds to a schedule event fragment in open application interface, OAI, standards.

4. The system as claimed in one of claims 1 to 3, wherein if a main service is selected the digital broadcasting receiving terminal compares a schedule ID value of each service included the ESG data with subschedule-identification value of the selected main service, and confirms that a service having a schedule ID value matching the subschedule-identification value corresponds to sub-services of the selected main service.

5. A method for providing a digital video broadcasting service, and for simultaneously providing multiple sub-services connected with a main service and the main service while providing a DVB-H service, by a system for providing a digital video broadcasting service, including a digital broadcasting station and a digital broadcasting receiving terminal, the method comprising the steps of:
(a) adding, by the digital broadcasting station, subschedule-identification fields, in which information on at least one sub-service connected with a main service can be stored, to a service information fragment providing information on services;
(b) setting schedule ID values included in a fragment of the sub-service to subschedule-identification values of the subschedule-identification fields, generating the service information fragment, including the generated service information fragment in Electronic Service Guide, ESG data, and transmitting the ESG data, by the digital broadcasting station;
(c) receiving the ESG data, and checking information on at least one sub-service connected with a selected main service through the service information fragment if the main service is selected, by the digital broadcasting receiving terminal; and
(d) simultaneously displaying, by the digital broadcasting receiving terminal, the checked sub-services and the main service.

6. The method as claimed in claim 5, wherein the service information fragment corresponds to a schedule event fragment in digital video broadcasting-handheld convergence of broadcasting and mobile services, DVB-H CBMS, standards.

7. The method as claimed in claim 5, wherein the service information fragment corresponds to a schedule event fragment in open application interface, OAI, standards.

8. The method as claimed in one of claims 5 to 7, wherein step (c) comprises the steps of:
comparing a schedule ID value of each service included the ESG data with subschedule-identification value of the selected main service if a main service is selected; and
confirming that a service having a schedule lD value matching the subschedule-identification value corresponds to sub-services of the selected main service.
